(19) Europäisches Patentamt
European Patent Office
Office européen des brevets

(11) **EP 3 493 430 B1**

(12) **EUROPEAN PATENT SPECIFICATION**

(45) Date of publication and mention
of the grant of the patent:
**27.05.2020 Bulletin 2020/22**

(51) Int Cl.:
**H04B 10/112** *(2013.01)*   **H04B 10/69** *(2013.01)*
**G02B 26/06** *(2006.01)*

(21) Application number: **17204456.2**

(22) Date of filing: **29.11.2017**

(54) **METHOD FOR DETERMINING ALTERING PARAMETERS FOR ALTERING THE OPTICAL FEATURES OF AN OPTICAL ELEMENT FOR COMPENSATION OF DISTORTIONS IN A BEAM FOR OPTICAL FREE-SPACE COMMUNICATION**

VERFAHREN ZUR BESTIMMUNG VON ÄNDERUNGSPARAMETERN ZUR VERÄNDERUNG DER OPTISCHEN EIGENSCHAFTEN EINES OPTISCHEN ELEMENTS ZUR KOMPENSATION VON VERZERRUNGEN IN EINEM STRAHL ZUR OPTISCHEN FREIRAUMKOMMUNIKATION

PROCÉDÉ POUR DÉTERMINER LA MODIFICATION DE PARAMÈTRES POUR MODIFIER LES CARACTÉRISTIQUES OPTIQUES D'UN ÉLÉMENT OPTIQUE DE COMPENSATION DE DISTORSIONS DANS UN FAISCEAU DE COMMUNICATION OPTIQUE EN ESPACE LIBRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.06.2019 Bulletin 2019/23**

(73) Proprietors:
• **Deutsches Zentrum für Luft- und Raumfahrt e.V.**
  **51147 Köln (DE)**
• **Universitat Politècnica De Catalunya**
  **08034 Barcelona (ES)**

(72) Inventors:
• **MATA CALVO, Ramon, Dr.**
  **81543 München (DE)**
• **CARRIZO, Carlos Eduardo**
  **81241 München (DE)**
• **BELMONTE, Aniceto**
  **43850 Cambrils (ES)**

(74) Representative: **dompatent von Kreisler Selting Werner -**
  **Partnerschaft von Patent- und Rechtsanwälten mbB**
  **Deichmannhaus am Dom**
  **Bahnhofsvorplatz 1**
  **50667 Köln (DE)**

(56) References cited:
**US-A1- 2007 278 386**

• **HUIZHEN YANG ET AL: "Performance Comparison of Wavefront-Sensorless Adaptive Optics Systems by Using of the Focal Plane",** INTERNATIONAL JOURNAL OF OPTICS, vol. 2015, 1 January 2015 (2015-01-01), pages 1-8, XP055472138, ISSN: 1687-9384, DOI: 10.1155/2015/985351
• **Christina Morfopoulou: "Wavefront sensorless Adaptive Optics System for Satellite-to-Ground Links", , 21 July 2008 (2008-07-21), XP055472114, Oberpfaffenhofen** Retrieved from the Internet: URL:http://artemis.cslab.ntua.gr/el_thesis /artemis.ntua.ece/DT2008-0164/DT2008-0164. doc [retrieved on 2018-05-03]
• **PENGZHI JIANG ET AL: "A new performance metric on sensorless adaptive optics imaging system",** OPTIK., vol. 127, no. 1, 1 January 2016 (2016-01-01), pages 222-226, XP055472134, DE ISSN: 0030-4026, DOI: 10.1016/j.ijleo.2015.10.051
• **ISAAC FREUND ET AL: "Structural correlations in Gaussian random wave fields",** PHYSICAL REVIEW E. STATISTICAL PHYSICS, PLASMAS, FLUIDS, AND RELATED INTERDISCIPLINARY TOPICS., vol. 51, no. 4, 1 April 1995 (1995-04-01), pages 3770-3773, XP055471856, US ISSN: 1063-651X, DOI: 10.1103/PhysRevE.51.3770

EP 3 493 430 B1

- **V. A. BOGACHEV ET AL: "Numerical simulation of sensorless adaptive phase correction of regular, vortical, and incoherent multimode laser beams", ATMOSPHERIC AND OCEANIC OPTICS, vol. 30, no. 2, 1 March 2017 (2017-03-01), pages 191-197, XP055472086, RU ISSN: 1024-8560, DOI: 10.1134/S1024856017020051**
- **HUIZHEN YANG ET AL: "Model-based wavefront sensorless adaptive optics system for large aberrations and extended objects", OPTICS EXPRESS, vol. 23, no. 19, 10 September 2015 (2015-09-10), page 24587, XP055472143, DOI: 10.1364/OE.23.024587**
- **Huang Linhai ET AL: "Wavefront sensorless adaptive optics: a general model-based approach", Optics express, 3 January 2011 (2011-01-03), pages 371-4474, XP055472146, United States DOI: 10.1364/OE.19.000371 Retrieved from the Internet: URL:https://www.osapublishing.org/DirectPDFAccess/71F770B3-9D31-DAA7-8913ED81A9E54FEE_209129/oe-19-1-371.pdf?da=1&id=209129&seq=0&mobile=no [retrieved on 2018-05-03]**

**Description**

The present invention relates to a method for determining altering parameters for altering the optical features of an optical element for compensation of distortions in a beam for optical free-space communication. More specifically, the present invention relates to a sequential convex optimization technique for adaptive optics compensation in free-space laser communication.

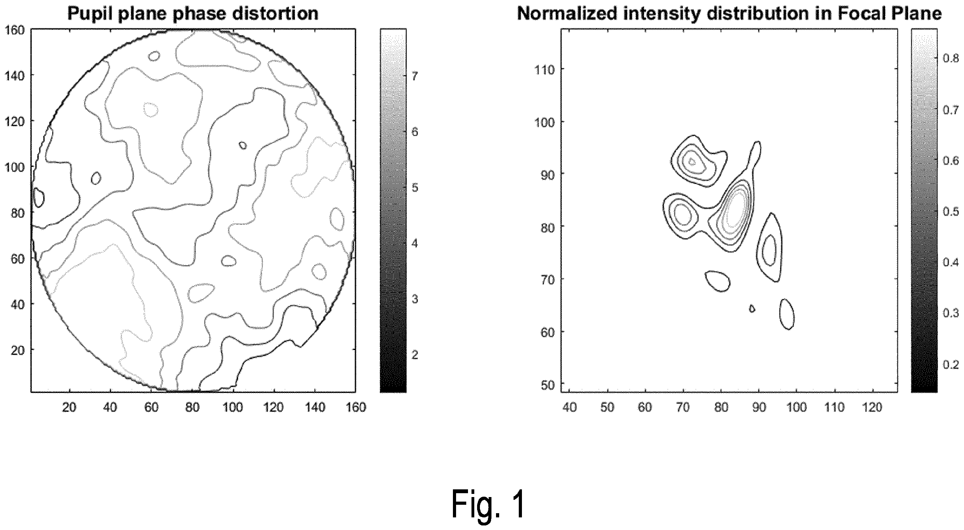

In the transmission of optical data signals through the atmosphere, there are signal disturbances due to turbulence induced variations of the refractive index of the media, which alter the phase front of the propagating beam. In free space optical communication one wants to couple the light into a single-mode fiber in order to use the fiber-based telecommunications components. Due to these phase disturbances of the channel one has a strong loss in the coupled power, especially in scenarios of laser downlinks between satellites or airplanes and an optical ground station. In these scenarios, the telescope aperture diameter is generally much larger than the spatial coherence of the field. As a consequence thereof, when several region of the phase front have different phases, multiple intensity spots (speckles) in the focal plane (where the optical fiber is located) are obtained (see Fig. 1). Furthermore, these phase fluctuations of the wavefront change in the millisecond scale, so that the intensity spots in the focal plane make it impossible to couple the light into the fiber. To overcome this problem, at the ground station one can use adaptive optics to correct for these phase perturbations and get a single circularly symmetric spot that can be launched into the fiber. An adaptive optics system (AO) must estimate the phase of the received signal and compensate for the disturbances by the use of a deformable mirror.

The estimation of the phase of the beam is made by a wavefront sensor.
This invention describes a new concept, based on the focal plane intensity measurements targeting scenarios of strong turbulence.

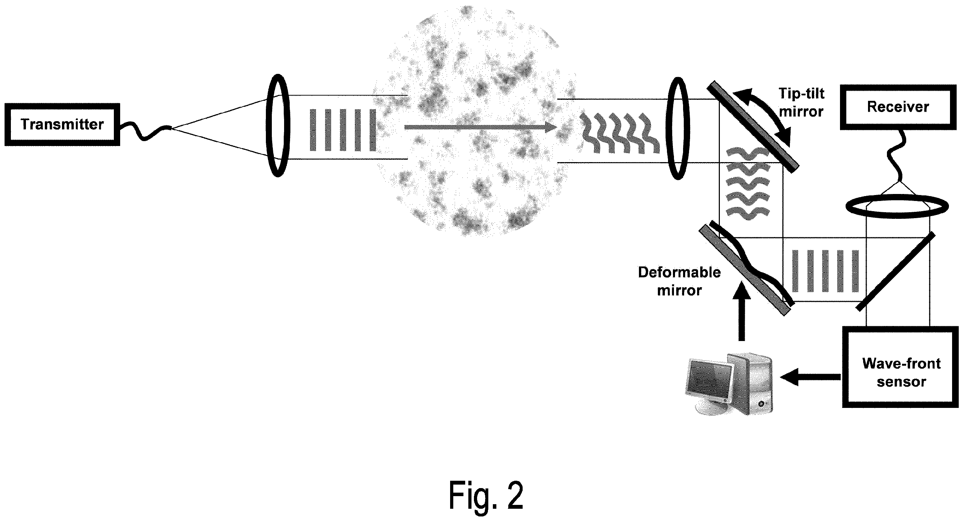

A general diagram of an AO system is shown in Fig. 2. The laser beam travels from the transmitter through a turbulent atmosphere where the wavefront experience distortions in phase (aberrations) and amplitude (scintillation).

When this wavefront is received by the telescope, an initial Tip-Tilt compensation system corrects the angle of incidence. Then, the beam is reflected in the deformable mirror (DM) whose task is to correct the higher order distortions. Examples of deformable optical elements and specifically deformable mirrors are described in [1]. After that, the beam is split in two subbeams. One goes to the wavefront sensor which senses the phase distortions and sends the information to a computer for further processing. With this information the computer sends control commands to the DM ordering it to reshape. If the sensing of the distorted phase front is correct, the shape of the DM should be equal to the distorted phase but mirrored. The consequence is compensation and flattening of the phase, which implies a correction of the turbulence induced distortions. The second split subbeam goes to the receiver, previous to fiber coupling. If no correction is performed, the distorted phase lead to focal speckles (see Fig. 1) and signal fading in the coupled power. When the phase front is successfully corrected, the speckles concentrate in a single stable spot of intensity that can be efficiently coupled in the fiber.

Optical communications from satellites and airplanes need adaptive optics to couple the light into a single mode fiber (SMF). This is essential if one wants to increase the data transmission through optical pre-amplification or DWDM technology, since all of these technologies need SMF fiber coupling.

Adaptive optics systems have been developed since the 90s for the field of astronomy [2]. A central element of the system is the wavefront sensor (WFS), which performs the phase estimation. The most common wavefront sensor is the Shack-Hartmann (SH), which captures the incident wavefront with an array of smaller sub lenses, and then measures the slopes of the focal spots produced by these lenses in the camera sensor. Using these slopes, the local phase tilt on each sub lens is calculated, so the entire profile of the distorted phase can be reconstructed. This technique is limited by the strength of the turbulence; i.e. Shack-Hartmann Sensor can reliably estimate the phase under low turbulence [3].

Other wavefront sensors include "Curvature Sensor" [4], "Pyramid Sensor" [5], "Interferometer by Fourier Fringe Analysis" [6] or "Phase Diversity" [7].

In LEO satellite downlinks the combined effects of the beam angular velocity and the long optical path at lower elevations, lead to a strongly distorted phase front, highly scintillated, with phase dislocations, and with very short coherence times. The later one defines how fast the compensation system should work to correct the distorted phase front. Traditional AO approaches, previously introduced, do not work in these scenarios. The reason rest on the fact that AO sensors for astronomy are designed to operate at elevation angles above 30 degrees, where turbulence is no so strong, targeting the improvement of the image quality contrast. On the contrary, AO sensors for laser communications need also to operate at elevations below 30 degrees, under strong turbulence, seeking to minimize the signal fluctuations and improve the efficiency of the coupled power.

When phase dislocations appear in a distorted phase front, the rotational component of the phase cannot be measured by the Shack-Hartmann sensor because its working principle is based only on the measurement of the gradient of the phase (the gradient of the rotational is zero). There are methods that estimate the rotational of the phase, but only for low turbulence. Performance can be improved with higher hardware complexity and billing costs, but this also involves longer computation times which exceed the available time for correction. In consequence, it becomes a limitation for optical downlinks [8].

Interferometric systems and the Pyramid sensor have an increased hardware complexity, making them difficult to integrate into an optical ground station (OGS) for communications. Simplicity and robustness are desired characteristics of an AO system for an OGS.

Iterative methods can compensate the phase of the distorted field without a wavefront sensor, modifying the state of the deformable mirror in an stochastic fashion, and using the coupled power in fiber as a feedback for the optimization [9]. These methods are more robust to branch points (phase dislocations), can work efficiently under strong turbulence, but require a high number of iterations to converge to a solution. A typical number of the required iterations is 100, which implies that in order to correct the phase distortions in a timeframe of 1 milliseconds (coherence time of the phase front in LEO downlinks) control loops of around 100 kHz are required [10]. This is very difficult to achieve with the state of the art technology.

The control bandwidth challenge implies reducing the total number of iterations needed without impacting on the performance or adding additional hardware. This can be done with the help of additional information already present in the focal intensity images of the tracking camera (speckle of intensity), which is always present in an optical ground station.

A first idea to restore the phase from focal spots is described in EP-B-2 388 934. But due to phase ambiguities, the phase can only be recovered for odd phase distributions when the distortion is low, in other words for very low turbulence conditions. On the other hand, it is possible to extract useful information from the intensity and spatial distribution of focal spots (speckles), which help us reduce the number of iterations and increase the range of turbulence correction.

In HUIZHEN YANG ET AL: "Performance Comparison of Wavefront-Sensorless Adaptive Optics Systems by Using of the Focal Plane", INTERNATIONAL JOURNAL OF OPTICS, vol. 2015, 1 January 2015 (2015-01-01), pages, 1-8, ISSN: 1687-9384, DOI: 10.1155/2015/985351, there is proposed an iterative adaptive optics method that uses N captures of the focal image (made with a camera) to iteratively calculate the N coefficients values of a predefined set of N Zernike polynomials. These weighted Zernike polynomials are used as orthogonal basis to represent the incident distorted field phase. Then, the correction capabilities and convergence speed are compared by means of the well-known Stochastic Parallel Gradient Descent (SPGD) algorithm. It is concluded in this paper that the proposed method requires less number of iterations than the SPGD to provide better performance. It is an object of the present invention to provide a new technique for adaptive optics compensation in optic free-space communication.

According to the present invention there is provided a method for detection of the modification parameters for modification of the optical characteristics of an optical element arranged in the optical path for modulated radiation of a receiver for optical free-space communication, for compensation of phase disturbances caused as a consequence of atmospheric turbulences, wherein, in said method

- the radiation is focused, by means of a lens or other optical system, onto the center of a focal surface arranged in the focal plane,
- the focal surface radiation pattern is captured by a camera,
- individual radiation intensity speckles are identified within the focal surface by means of image processing software,
- for each radiation intensity speckle, the position of the point of maximum radiation intensity is obtained,
- to the point of maximum intensity of each radiation intensity speckle, a software-based plane wavefront is assigned, namely a tilting angle and a radiation energy are assigned to each plane wavefront on the basis of the position of the point of maximum intensity and of the radiation intensity of the associated speckle maximum thereof,
- the plane wavefronts are sorted in accordance to the amount of the maximal intensities of the radiation intensity speckles, starting with the highest maximum intensity,
- one of the wavefronts is selected as a reference wavefront,
- on the basis of the reference wavefront, phase shifts of the wavefronts relative to each other are obtained,
- the optical element is modified in correspondence to different phase shifts assumed per wavefront, wherein, for each plane wavefront, that assumed phase shift at which the energy of the radiation of the respective wavefront is maximal, is selected as the obtained phase shift assigned to this plane wavefront,
- from the wavefronts, the energies of the radiation of the these wavefronts, the tilting angles and the detected phase shifts, there is obtained a set of modification parameters for the modification of the optical characteristics of the optical element required for compensation of the phase disturbances.

In an embodiment of the present invention, the obtained phase shift of a wavefront is determined as that phase shift at which, with different modifications of the optical element, the energy of the radiation is maximal, wherein the optical element is modified by means of different sets of presettable parameters, each set among them corresponding to a different phase shift, and, each time, the energy of the radiation is metrologically obtained, wherein the obtained phase shift is that phase shift which results from the set of modification parameters at which the energy of the radiation of the respective plane wavefront is maximal.

In a further embodiment of the present invention it is provided that the maximum of the energy of the radiation is obtained on the basis of a curve passing through at least two and preferably three points which indicate the respective energy of the radiation at least two and preferably three assumed phase shifts in correspondence to which the optical element is deformed, wherein this curve is obtained by a fitting algorithm, particularly by convex optimization and preferably by hyperbolic fitting, and wherein the obtained phase shift is that phase shift at which the curve comprises its absolute maximum.

According to a further aspect of the present invention, as a reference wavefront, that plane wavefront is selected which is assigned to the radiation intensity speckle whose point of maximum intensity comprises the highest intensity of the points of maximum intensity of all radiation intensity speckles.

According to another aspect of the present invention it is provided that, in case that a plurality of radiation intensity speckles exist that have points of maximum intensity with identical intensities, one radiation intensity speckle is selected among these radiation intensity speckles and that its assigned plane wavefront is used as a reference wavefront.

In a further specific embodiment of the present invention it is provided

- that the phase shift of a first wavefront relative to the reference wavefront is obtained and, on the basis of this phase shift and of the energy of the radiation of the wavefront and on the basis of the energy of the radiation and the tilting angle of the reference wavefront, a new reference wavefront is computed which is now defined *inter alia* by the energy of its radiation and by the resultant phase,
- that the phase shift of a second wavefront relative to the new reference wavefront is obtained and, on the basis of this phase shift, the energy of the radiation of this wavefront and on the basis of the energy of the radiation and the phase of the reference wavefront, there is in turn computed a new reference wavefront,
- that this procedure is performed for each wavefront for which no phase shift has yet been obtained,
- that the set of modification parameters for the optical element is obtained on the basis of the energy of the radiation and the resultant phase of the last computed reference wavefront, wherein the resultant phase is an approximation of the desired phase and/or the best solution therefor for compensation of the phase disturbance, and
- that the optical element is modified with respect to its optical characteristics in correspondence to the obtained modification parameters.

In a preferred further embodiment of the present invention, the modification parameters are used for modification of the shape of the optical element or for modification of the shape of an optical surface of the optical element that has a transmissive and/or reflective effect, and/or for modification of the optical characteristics of the optical element without deformation of the optical element.

In another preferred further embodiment of the present invention, the optical element which is used is an optical transmission and/or reflection element, wherein specifically the optical element is a mirror.

Preferably, the optical element comprises an optical surface from which the radiation is conveyed onward toward the camera by transmission and/or reflection.

According to a further aspect of the present invention, for detection of the energy of the radiation and/or detection of the information of the radiation that is defined by the modulation, a part of the radiation is coupled into a single optical fiber.

A device for reception of modulated radiation in optical free-space communication can be provided, wherein the device comprises

- a camera for capturing the intensity distribution of the received radiation focused on a focal plane,
- an optical element variable in its optical characteristics and operative to convey received radiation onward toward the camera, and
- an evaluation and control unit for evaluation of the camera image performed according to the method according to any of the preceding embodiments and invention and for controlling the optical element so as to modify its optical characteristics.
- wherein in this device the method according to the invention is employed.

According to this aspect there is arranged an optical outcoupling unit arranged between the optical element and the camera for outcoupling a part of the modulated radiation and for incoupling into an optical single fiber so as to obtain the information determined by the modulation and, if required, for obtaining the energy of the radiation.

The basic idea of the invention in a preferred embodiment is to use the focal intensity distribution (speckle), of a single captured focal image per field realization, in combination with an iterative method to compensate the distorted incident field. The main focal speckles (those with higher intensity) can be associated to a set of pupil plane waves that need to be sequentially summed up to restore the distorted phase of the field. Each plane wave is added after its relative phase shift, respect to the others, has been discovered. To discover the phase shift between plane waves, the feedback coupled power in a single-mode fiber, together with an iterative convex optimization method, is used. With the sequential addition of each optimized plane wave, and the extraction of the resultant overall phase (applied to the DM), a gradual compensation of the incident distorted phase front is achieved. This leads to a gradual gain and stabilization of the overall coupled power.

In this fashion, we have a method that is systematic, simple, and optimal to compensate a distorted phase front, with a reduced number of total iterations, making the approach feasible for FSOC scenarios.

The main results and features of the invention can be summarized as follows:

- The hardware complexity of the system is low: One only need the information of the tracking camera and coupled power in the fiber to perform and accelerate the phase compensation
- The number iterations are greatly reduced: the number of pupil modes to be optimized is proportional to the number of main speckles in the focal plane.
- The iterations are sequential and the optimization convex: Due to the convexity of the problem, only three iterations per mode (pupil plane wave) are required for each plane wave optimization. This ensures a reduced total number of iterations and feasibility in FSOC scenarios.
- The method works under heavy turbulence, according to the performing simulations.

The prior art problems with adaptive optics systems and the solution proposed according to the invention can be summarized as follows.

Wavefront distortions of optical waves propagating through the turbulence atmosphere are responsible for phase and amplitude fluctuations causing random fading in the signal coupled to free-space laser communication receivers. Wavefront distortions can be confronted, in principle, with adaptive optics technology that adapt to the incoming optical signal and mitigate the likeliness of fading. However, real-time adaptive optics requires phase wavefront measurements which are generally difficult under propagation conditions typical for communication scenarios. As an alternative to the conventional adaptive optics approach, according to the invention, a novel phase-retrieval technique is discussed that determines the unknown phase wavefront from focal-plane intensity measurements. The adaptation approach is based on sequential optimization of the speckle pattern in the focal plane and works by iteratively updating the phases of individual speckles to maximize received power. It was found that, instead of phase wavefront measurements, the sequential phase retrieval technique is a simpler and more flexible approach to accomplish reduction of atmospheric fading and increase signal coupling to the receiver.

By way of the invention, it can be shown that a combination of an iterative approach, image processing of a single focal intensity image, and a convex optimization technique, can correct the distorted pupil phase in a wide range of turbulence conditions, and within the coherence time of the atmosphere. The proposed technique shows a simple and versatile method for pupil phase compensation that provides significant reduction in the bandwidth required for the iterations, while keeping the hardware complexity low. The attained reduction in the required bandwidth moves towards the feasibility of iterative approaches in FSOC applications. The method according to the invention allows an adaptive use of the required iterations for SNR above 30dB, which is reasonable for LEO and airborne downlink scenarios. From a point of view of a communication channel, the technique provides an overall improvement in the mean coupled power and reduction of the fading.

The present invention will be described in more detail referring to a preferred embodiment and to the drawing comprising the following Figures:

Fig. 1            Example of effect of phase distortion in the pupil plane (telescope aperture) and its effect in the focal plane (intensity speckle).

Fig. 2            Adaptive Optics System: The sender sends a beam through the channel (atmosphere) and is distorted. At receiver a tip-tilt mirror corrects the angle of incidence. The wavefront sensor estimates the phase of the beam. The deformable mirror changes its surface to correct the phase perturbations. A control loop allows real-time control of the deformable mirror wavefront sensor information.

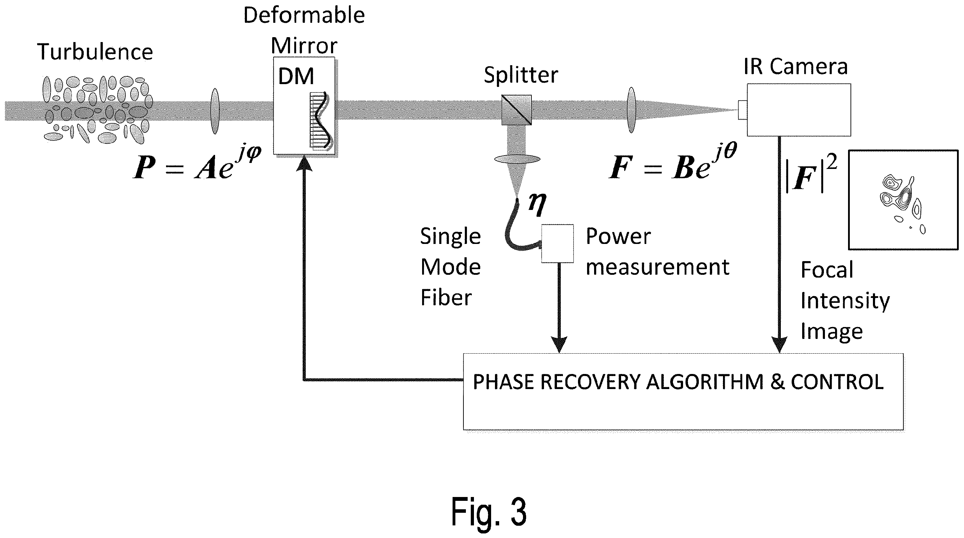

Fig. 3            A representative diagram of the system, including the relevant hardware. A distorted incident field $P = A\exp(j\varphi)$ is reflected in the deformable mirror (DM) and then split to be coupled into a single mode fiber and focused in the detection camera. A single intensity image $|F|^2$ and the

real-time coupled signal $\eta$ are processed to find the estimated phases $\hat{\varphi}$ to control the DM. This $\hat{\varphi}$ is sequentially iterated and optimized with the increment of $\eta$ due to the compensation of $\varphi$.

| | |
|---|---|
| Figs. 4 and 4a to 4d | A block diagram of the algorithm. Summarize the key steps for signal acquisition and processing and phase regeneration throughout optimization. Block diagram of the phase recovery algorithm. From top to bottom the focal image is captured and processed individualizing each main speckle maximum $b_l$ and position $r_l$. There is a one to one correspondence between a DM tilt and $r_l$. This tilt becomes the required plane wave phase $K_l$. For each speckle, 3 software-based variations of $\hat{\varphi} = \{\hat{\varphi}_1, \hat{\varphi}_2, \hat{\varphi}_3\}$ are created with 3 piston phases $\theta = \{\theta_1, \theta_2, \theta_3\}$ applied to the current plane wave. Parabolic optimization is used to find the optimum phase for the best coupling. With each optimization $\hat{\varphi}$ approaches to a fully optimized phases $\varphi$. |
| Fig. 5 | An illustration of the single mode fiber coupling efficiency versus the number of corrected speckles for different turbulence conditions. |

The main idea is that the distorted phase front into the aperture can be restored as the sum of optimized plane waves. The number of plane waves is defined by the number $M$ of main speckles in the focal plane. The optimization of each plane wave involves finding the relative phase shift between them, and this is done by using the coupled power as feedback. Since the optimization process is convex, only three measurements of the coupled power per plane wave variation are required. For this reason, all phase compensation requires only $3(M - 1)$ iterations, making the method feasible in FSOC scenarios.

A diagram of the turbulence compensation system is shown in Fig. 3 where the laser beam passes through the turbulent atmosphere and reaches the optical receiver. At this point the wavefront $P$, which has experienced amplitude $A$ and phase $\varphi$ distortions, is captured by a single monolithic aperture and then guided and reflected in a deformable mirror. The DM introduces a phase-only compensation modifying its shape based on an estimated phase map $\hat{\varphi}$. The reflected beam $P_c$ is now compensated in phase $(\varphi - \hat{\varphi})$ maintaining the amplitude $A$ unaltered. Here, $\hat{\varphi}$ gradually changes as the resultant of an iterative sequential algorithm running in the computer. This algorithm requires two inputs hence the beam experiences a split in two arms. The first input is a single captured focal intensity image $|F|^2$ (one image per field realization) that results of focusing the split beam into an infrared camera sensor. Here, $F$ is the focal plane complex field of amplitude $B$ and phase $\theta$ that results of the optical Fourier transform of $P_c$. The second input is a real time acquisition of the power coupled in a single mode fiber (SMF). The coupled power is defined by the SMF coupling efficiency $\eta$ which is calculated using the overlap integral of $P_c$ with the back propagated Gaussian fundamental mode of the fiber $U_0$, with $\int |U_0|^2 = 1$, and* indicating complex conjugate, see Eq. (1).

$$\eta = \frac{\left| \int P_c^* U_0 \right|^2}{\int |P_c|^2 \int |U_0|^2} \qquad (1)$$

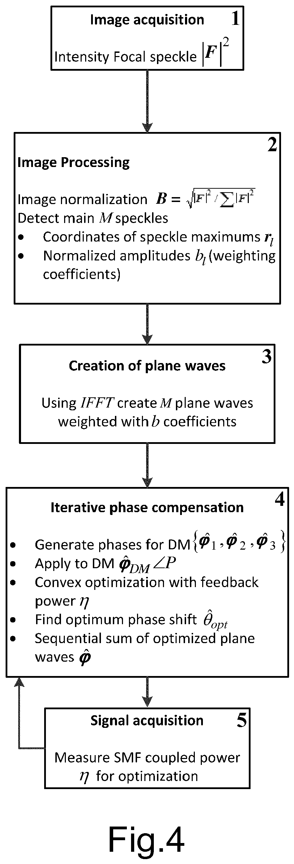

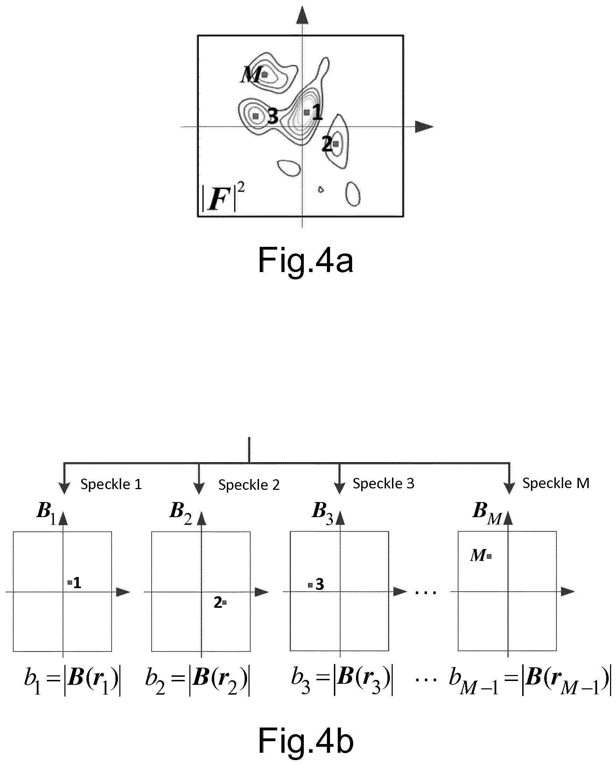

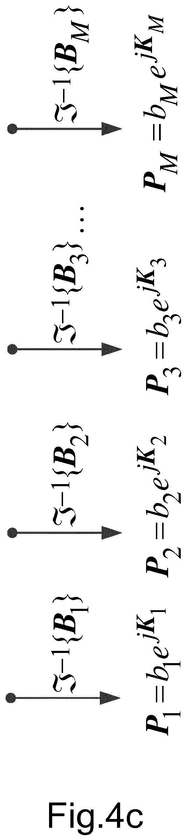

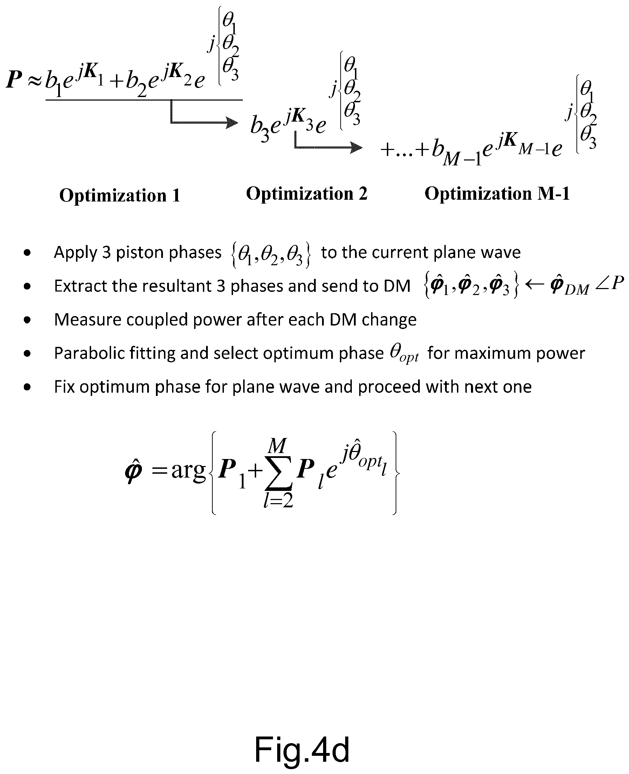

The working principle is based on the concept of angular wave spectrum "Angular Wave Spectrum Method", in which each field component in the focal plane results from the propagation of plane waves defined in the aperture. In this approach (Fig. 4) we consider that the input field $P = A\exp(j\varphi)$ in the aperture can be approximated as the sum of dominant plane waves $\exp(jK)$, which define the large speckle characteristics in the focal plane. After an initial acquisition and processing of the focus intensity image $|F|^2$, we classify the number of $M$ main speckles based on their peak magnitude and spatial location. With this information, the Inverse Fourier Transform (IFT) can be used to obtain each plane wave.

$$P \approx \sum_{l=1}^{M} b_l \exp\left( j\theta_l \right) \exp\left( jK_l \right) \qquad (2)$$

In Eq. (2), $K_l$ represents the tilt of each $l$ plane wave. The scalars $b_l$ and $\theta_l$ are the peak amplitude and phase of the $l$ speckle. Likewise the scalar $\theta_l$ is also the phase shift of the projected $l$ pupil plane wave. Because the complex information in $|F|^2$ is lost, the missing parameter for a full reconstruction of $P$ is $\theta_l$ which cannot be directly measured but iteratively discovered. Hence, the phase compensation can be formulated as a multivariate optimization problem where the coefficients to be optimized are $\theta_l$ with $l \in \{1,2,..., M\}$.

The reason of approximating the field $P$ using only a discrete number of speckles, considering only the magnitude at the peaks as weighting factors of the plane waves, and their scalar phases as phase shifts of the plane waves, results of the analysis performed by [11]. This analysis show that even though intensity focal speckles are uncorrelated, every speckle shows local spatial correlation between its intensity distribution and phase gradients where minimum phase gradients are highly correlated with maximum slope of intensity. Consequently, it is sufficient to process only the $M$ main speckles of higher intensity, considering solely their peak magnitude, local phase, and spatial coordinate of these peaks to define equal number of dominant plane waves.

Because these $M$ plane waves are uncorrelated, we can treat the multivariate optimization problem with the coordinate ascent algorithm. This method treats the multivariate problem as a set of simpler sub-problems of single dimension maximizing the objective function $\eta$ by optimizing in sequence the scalar variables (coordinates) $\theta_l$.

$$\hat{\varphi} = \arg\left\{ b_1 \exp(jK_1) + \sum_{l=2}^{M}\left( b_l \exp\left(j\left(K_l + \theta_l\right)\right) + \left[ \sum_{t \neq l} b_t \exp\left(j\left(K_t + \theta_t\right)\right) \right] \right) \right\} \quad (3)$$

The Eq. (3) represents the sequential optimization of each plane wave of Eq.(2). As previously mentioned, the weights $b_l$ and plane wave tilts $K_l$ are known, and the task involves finding the relative phase shift $\theta_l$ of each plane wave. During the optimization of one coordinate $l$, all others $t \neq l$ are kept fixed. Once finished, the recently adjusted $\theta_l$ becomes part of the set of $t \neq l$ fix coordinates and the next $\theta_{l+1}$ begin to be optimized. The process continues until the $l = M$ variable is adjusted. The argument of the progressive sum of plane waves $\hat{\varphi}$ (that is the result phase of the combined plane waves) reduces the relation $\varphi - \hat{\varphi}$ for the compensated field $P_c$ in (Fig. 3) and with each new optimization the objective $\eta$ in Eq. (1) increases, as well as the number of focal speckles reduces due to the harmonic compensation in the pupil plane. The first plane wave in Eq. (3) does not need to be optimized since it represents the main focal speckle which requires only a general tilt correction providing the initial $\eta$ improvement. Because the optimization problem is convex there is always a global maximum or minimum and it is required only three measurements of $\eta$ in Eq. (1), after each variations of $\theta_l$ in Eq. (3), in order to find the optimum $\theta_l$ of each $K_l$. This convexity property is a key factor to reduce the iteration number and fulfill FSOC time constraints.

Finally, the method is versatile and can also perform the correction directly in the focal plane of Fig. 3 if the DM is located in such a position. For this, the incident field $P$ could be split and focused in the camera, which would help to detect the speckles position and intensity distribution, and on the DM which should apply three piston phase variations, this time on the entire area of each speckle. The reflected beam is then collected by another lens located at equal focal distance and later focused into a SMF. This can be mathematically represented by Eq. (4)

$$\varphi_c = \arg\left[ \Im^{-1}\left\{ \sum_{l=1}^{M}\left( \boldsymbol{b}_l \exp(j\theta_l) + \left[ \sum_{t \neq l} \boldsymbol{b}_t \exp(j\theta_t) \right] \right) \right\} \right] \quad (4)$$

where the bold $b_l$ indicates that the constant phase $\theta_l$ is applied on the entire speckle area, and the $\Im^{-1}$ denote the 2D back Fourier transform which is performed optically. The resultant $\varphi_c$ represents the already compensated $\varphi$.

This method is different from other iterative methods because:

- We know exactly which plane waves (pupil modes) needs to be optimized to correct the associated focal speckle. For this reason, it is not a blind optimization, but a well-defined systematic and controlled approach.
- We need only three power measurements to find the optimal phase shift of each plane wave. Since the plane wave phase shift in the aperture is 2n periodic, the coupled power also varies periodically. We only need 3 measurements to perform a parabolic approximation and find the optimum phase for a maximum.
- Since the average number of $M$ main speckles to be processed is proportional to $D/r_0$, being $D$ the telescope aperture diameter and $r_0$ the Fried parameter, the total number of iterations required for full field recovery $3(M - 1)$ is also proportional to the $D/r_0$ of the turbulent scenario. This makes the approach feasible in FSOC.

Method of the algorithm

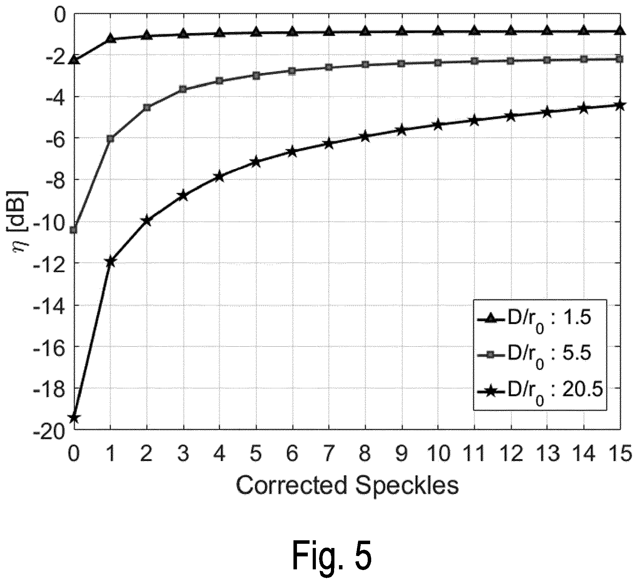

For a better understanding of the method and the required steps, a block diagram and graphical representation of the process involved is depicted in (Fig. 5) and detailed as follows:

1. **Image acquisition:** the IR camera in (Fig. 3) captures a single realization of the focal intensity image $|F|^2$. This image represents the first input of the "computer" block.

2. **Image processing:** The required information for the creation of the plane waves is gathered. The image is normalized to the cumulative sum of all image components. Then, the $M$ main intensity speckles are individualized and classified in descending order based on their maximums $b_l$ and spatial coordinates $r_l$. Here, $b_l$ is the weighting factor of the plane wave in Eq. (2).

3. **Creation of plane waves:** The set of software-based plane waves are created. The $r_l$ and the IFFT are used to discover the associated plane wave phase tilts $K_l$ (DM shape). In practice a lookup table is created during the calibration process of the system, where each coordinate $r$ in the focal plane is associated to the proper DM tilt. This tilt represents the required plane wave phase. In this fashion, each main speckle can have an associated software-based weighted plane wave. Up to now, the only missing term in Eq. (2) is the optimum estimated phase shift $\hat{\theta}_{opt}$ for each plane wave.

4. **Iterative phase compensation:** the estimated phase $\hat{\varphi}$ for the field compensation is sequentially created. This implies a sequential discovery of $\hat{\theta}_{opt}$ for each plane wave, as shown in Eq. (3). Here, three software-based variations of the estimated pupil phase (DM shape) $\hat{\varphi} = \{\hat{\varphi}_1, \hat{\varphi}_2, \hat{\varphi}_3\}$ are created with 3 piston phases $\{\theta_1, \theta_2, \theta_3\}$ applied to the current plane wave. Each $\hat{\varphi}$ is the argument of the sum of the current plane wave and the ones previously optimized. With each applied DM shape the coupled power $\eta$ Eq. (1) is recorded. A parabolic fitting of $\eta$ is used to discover the $\hat{\theta}_{opt}$ of the current plane wave. The estimated $\hat{\varphi}$ represents the output of the 'computer' block in (Fig. 3).

5. **Signal acquisition:** The coupled power is measured and used as real time feedback for the optimization process. This signal represents the second input of the computer block in Fig. 4.

Finally, all $M$ software-based plane waves have been summed up with the proper optimized phase shift $\hat{\theta}_{opt}$. The resultant argument $\hat{\varphi}$ defines the final shape of the DM that compensates the incident field (see Fig. 3) and improves the overall coupled power Eq. (1).

Once a field realization has been corrected, a new focal image is captured. Within the coherence time of the field (around 1 millisecond in FSOC scenarios) the new phase realization does not evolve abruptly. The algorithm should actively decide the new $M$ for the optimization and maintain the performance of the system at the presence of low phase distortion or even single speckle pattern. For this, it is necessary to keep track and use the previous $\hat{\theta}_{opt}$ as start value for the new estimates performing smaller variation to follow dynamically the phase evolution.

The performance of the approach is shown in Fig. 5 which shows how the coupling efficiency improves with the number of corrected speckles for different turbulent conditions. Assuming a telescope aperture of $D = 40cm$ (typical for FSOC), the range of turbulence conditions goes from low $D/r_0$ =1.5 to very strong $D/r_0$ = 20.5. Although an expected $D/r_0$ for "LEO-to-Ground" scenarios should not exceed 11 and is likely to be around 5 for the above mentioned $D$, it is clear that the algorithm is perfectly capable of dealing with strong turbulence conditions.

If we consider an expected $D/r_0$ =5.5, which is possible for elevations of 10° and telescope apertures of $40cm$, the required number of corrected speckles for a coupling efficiency better than -3dB is $M = 8$. This implies a number of iterations approximately equal to 3(8-1) = 21, which would imply a control bandwidth of around $21kHz$ to deal with coherent times of 1 milliseconds. This control loop bandwidth, even though difficult, is not impossible and represents a factor 5 reduction from the $100kHz$ required by other iterative methods.

The present invention can be used specifically in the following technical fields:

- Optical downlinks of satellites, airplanes or HAPS for high-level free-space optical communication systems
- Optical uplinks to satellite aircraft or HAPS can provide the downlink information of the downlink phase noise as pre-distortion of the signal.
- Optical transmission of frequency standards ("synchronization of optical clocks")
- Focusing the laser for high performance applications

## ABBREVIATIONS

AO      adaptive optics
DM      deformable mirror

OGS     optical ground station
SH      Shack-Hartmann
SMF     single mode fiber
WFS     wavefront sensor

## LIST OF LITERATURE

[1] P-Y Madec, "Overview of Deformable Mirror Technologies for Adaptive Optics and Astronomy", European Southern Observatory

[2] Hardy, "Adaptive Optics for Astronomical Telescopes", Oxford University Press, 1998

[3] Barchers, J. D.; Fried, D. L. & Link, D. J., "Evaluation of the Performance of Hartmann Sensors in Strong Scintillation", Appl. Opt., OSA, 2002, 41, 1012-1021

[4] Roddier, François, "Curvature sensing and compensation - a new concept in adaptive optics", Appl. Opt., OSA, 1988, 27, 1223-1225

[5] Chew, T. Y.; Clare, R. M. & Lane, R. G., "A comparison of the Shack-Hartmann and pyramid wavefront sensors Optics Communications", 2006, 268, 189 - 195

[6] Takeda,M., et.alt., "Fourier-transform method of fringe-pattern analysis for computer-based topography and interferometry", J. Opt. Soc. Am., OSA, 1982, 72, 156-160

[7] Fienup, J.R., et.alt., "Comparison of Phase Diversity and Curvature Wavefront Sensing", Proc. of conference on Adaptive Optical System Technologies, SPIE, 1998, 3353

[8] Murphy, K., et.alt., "Branch point detection and correction using the branch point potential method", Proc. SPIE, 2008, 6951, 695105

[9] Fienup, J. R., "Phase retrieval algorithms - a comparison", Appl. Opt., OSA, 1982, 21, 2758-2769

[10] Anzuola, E. et.alt., "Performance of wavefront-sensorless adaptive optics using modal and zonal correction", Proc. Optics in Atmospheric Propagation and Adaptive Systems XIX ,SPIE, 2016, 10002, 100020J

[11] Freund, I., "Structural correlation in Gaussian random wave fields", Phys. Rev. E 51, 3770 (1995).

## Claims

1. A method for detection of the modification parameters for modification of the optical characteristics of an optical element arranged in the optical path for modulated radiation of a receiver for optical free-space communication, for compensation of phase disturbances caused as a consequence of atmospheric turbulences, wherein, in said method

   - the radiation is focused, by means of a lens or other optical system, onto the center of a focal surface arranged in the focal plane,
   - the focal surface radiation pattern is captured by a camera,
   - individual radiation intensity speckles are identified within the focal surface by means of image processing software,
   - for each radiation intensity speckle, the position of the point of maximum radiation intensity is obtained,
   - to the point of maximum intensity of each radiation intensity speckle, a software-based plane wavefront is assigned, namely a tilting angle and a radiation energy are assigned to each plane wavefront on the basis of the position of the point of maximum intensity and of the radiation intensity of the associated speckle maximum thereof,
   - the plane wavefronts are sorted in accordance to the amount of the maximal intensities of the radiation intensity speckles, starting with the highest maximum intensity,
   - one of the wavefronts is selected as a reference wavefront,
   - on the basis of the reference wavefront, phase shifts of the wavefronts relative to each other are obtained,
   - the optical element is modified in correspondence to different phase shifts assumed per wavefront, wherein, for each plane wavefront, that assumed phase shift at which the energy of the radiation of the respective wavefront is maximal, is selected as the obtained phase shift assigned to this plane wavefront,
   - from the wavefronts, the energies of the radiation of the these wavefronts, the tilting angles and the detected phase shifts, there is obtained a set of modification parameters for the modification of the optical characteristics of the optical element required for compensation of the phase disturbances.

2. The method according to claim 1, **characterized in that** the obtained phase shift of a wavefront is determined as that phase shift at which, with different modifications of the optical element, the energy of the radiation is maximal, wherein the optical element is modified by means of different sets of presettable parameters, each set among them corresponding to a different phase shift, and, each time, the energy of the radiation is metrologically obtained, wherein the obtained phase shift is that phase shift which results from the set of modification parameters at which the energy of the radiation of the respective plane wavefront is maximal.

3. The method according to claim 1 or 2, **characterized in that** the maximum of the energy of the radiation is obtained on the basis of a curve passing through at least two and preferably three points which indicate the respective energy of the radiation at least two and preferably three assumed phase shifts in correspondence to which the optical element is deformed, wherein this curve is obtained by a fitting algorithm, particularly by convex optimization and preferably by hyperbolic fitting, and wherein the obtained phase shift is that phase shift at which the curve comprises its absolute maximum.

4. The method according to any one of claims 1 to 3, **characterized in that**, as a reference wavefront, that plane wavefront is selected which is assigned to the radiation intensity speckle whose point of maximum intensity comprises the highest intensity of the points of maximum intensity of all radiation intensity speckles.

5. The method according to claim 4, **characterized in that**, in case that a plurality of radiation intensity speckles exist that have points of maximum intensity with identical intensities, one radiation intensity speckle is selected among these radiation intensity speckles and that its assigned plane wavefront is used as a reference wavefront.

6. The method according to any one of claims 1 to 5, **characterized in**

   - **that** the phase shift of a first wavefront relative to the reference wavefront is obtained and, on the basis of this phase shift and of the energy of the radiation of the wavefront and on the basis of the energy of the radiation and the tilting angle of the reference wavefront, a new reference wavefront is computed which is now defined *inter alia* by the energy of its radiation and by the resultant phase,
   - **that** the phase shift of a second wavefront relative to the new reference wavefront is obtained and, on the basis of this phase shift, the energy of the radiation of this wavefront and on the basis of the energy of the radiation and the phase of the reference wavefront, there is in turn computed a new reference wavefront,
   - **that** this procedure is performed for each wavefront for which no phase shift has yet been obtained,
   - **that** the set of modification parameters for the optical element is obtained on the basis of the energy of the radiation and the resultant phase of the last computed reference wavefront, wherein the resultant phase is an approximation of the desired phase and/or the best solution therefor for compensation of the phase disturbance, and
   - **that** the optical element is modified with respect to its optical characteristics in correspondence to the obtained modification parameters.

7. The method according to any one of claims 1 to 6, **characterized in that** the modification parameters are used for modification of the shape of the optical element or for modification of the shape of an optical surface of the optical element that has a transmissive and/or reflective effect, and/or for modification of the optical characteristics of the optical element without deformation of the optical element.

8. The method according to any one of claims 1 to 7, **characterized in that** the optical element is an optical transmission and/or reflection element.

9. The method according to any one of claims 1 to 8, **characterized in that** the optical element is a mirror.

10. The method according to any one of claims 1 to 9, **characterized in that** the optical element comprises an optical surface from which the radiation is conveyed onward toward the camera by transmission and/or reflection.

11. The method according to any one of claims 1 to 10, **characterized in that**, for detection of the energy of the radiation and/or detection of the information of the radiation that is defined by the modulation, a part of the radiation is coupled into a single optical fiber.

**Patentansprüche**

1.  Verfahren zur Detektion von Änderungsparametern zur Änderung von optischen Eigenschaften eines optischen Elements, das in dem optischen Weg für modulierte Strahlung eines Empfängers zur optischen Freiraumkommunikation angeordnet ist, zur Kompensation von Phasenstörungen, die als Folge von atmosphärischen Turbulenzen entstehen, wobei bei dem Verfahren

    - die Strahlung mittels einer Linse oder eines anderen optischen Systems auf die Mitte einer in der Fokalebene angeordneten Fokalfläche fokussiert wird,
    - das Fokalflächenstrahlungsmuster von einer Kamera aufgenommen wird,
    - individuelle Strahlungsintensitätsflecken in der Fokalfläche mittels einer Bildverarbeitungssoftware identifiziert werden,
    - für jeden Strahlungsintensitätsfleck die Position des Punktes maximaler Strahlungsintensität erzielt wird,
    - dem Punkt maximaler Intensität jedes Strahlungsintensitätsflecks eine softwarebasierte ebene Wellenfront zugeordnet wird, und zwar sind auf Grundlage der Position des Punktes maximaler Intensität und der Strahlungsintensität des zugeordneten Fleckenmaximums der Strahlungsintensität jeder ebenen Wellenfront ein Neigungswinkel und eine Strahlungsenergie zugeordnet,
    - die ebenen Wellenfronten in Übereinstimmung mit der Anzahl maximaler Intensitäten der Strahlungsintensitätsflecken sortiert werden, beginnend mit der höchsten maximalen Intensität,
    - eine der Wellenfronten als eine Referenzwellenfront ausgewählt wird,
    - auf Grundlage der Referenzwellenfront Phasenverschiebungen der Wellenfronten relativ zueinander erzielt werden,
    - das optische Element entsprechend unterschiedlicher Phasenverschiebungen geändert wird, die pro Wellenfront angenommen werden, wobei für jede ebene Wellenfront die angenommene Phasenverschiebung, bei der die Energie der Strahlung der jeweiligen Wellenfront maximal ist, als die erzielte Phasenverschiebung ausgewählt wird, welche dieser ebenen Wellenfront zugeordnet ist,
    - aus den Wellenfronten, den Energien der Strahlung dieser Wellenfronten, den Neigungswinkeln und den detektierten Phasenverschiebungen ein Satz von Änderungsparametern für die zur Kompensation der Phasenstörungen erforderlichen Änderung der optischen Eigenschaften des optischen Elements.

2.  Verfahren nach Anspruch 1, **dadurch gekennzeichnet, dass** die erzielte Phasenverschiebung einer Wellenfront als die Phasenverschiebung bestimmt wird, bei der, mit unterschiedlichen Änderungen des optischen Elements, die Energie der Strahlung maximal ist, wobei das optische Elemente mittels unterschiedlicher Sätze von voreinstellbaren Parametern geändert wird, wobei jede Satz einer anderen Phasenverschiebung entspricht und jedes Mal die Energie der Strahlung messtechnisch erzielt wird, wobei die erzielte Phasenverschiebung die Phasenverschiebung ist, die aus dem Satz von Änderungsparametern resultiert, bei denen die Energie der Strahlung der jeweiligen planaren Wellenfront maximal ist.

3.  Verfahren nach Anspruch 1 oder 2, **dadurch gekennzeichnet, dass** das Maximum der Energie der Strahlung auf Grundlage einer Kurve erzielt wird, die durch mindestens zwei und vorzugsweise drei Punkte verläuft, welche die jeweilige Energie der Strahlung an mindestens zwei und vorzugsweise drei angenommenen Phasenverschiebungen angeben, entsprechend denen das optische Element verformt wird, wobei die Kurve durch einen Fitting-Algorithmus erzielt wird, insbesondere durch konvexe Optimierung und vorzugsweise durch hyperbolisches Fitting, und wobei die erzielte Phasenverschiebung die Phasenverschiebung ist, bei der die Kurve ihr absolutes Maximum aufweist.

4.  Verfahren nach einem der Ansprüche 1 bis 3, **dadurch gekennzeichnet, dass** als eine Referenzwellenfront die ebene Wellenfront ausgewählt wird, die dem Strahlungsintensitätsfleck zugeordnet ist, dessen Punkt von maximaler Intensität die höchste Intensität der Punkte von maximaler Intensität aller Strahlungsintensitätsflecken aufweist.

5.  Verfahren nach Anspruch 4, **dadurch gekennzeichnet, dass** in dem Fall, dass eine Vielzahl von Strahlungsintensitätsflecken vorliegt, die Punkte maximaler Intensität mit identischen Intensitäten aufweisen, ein Strahlungsintensitätsfleck unter diesen Strahlungsintensitätsflecken ausgewählt wird und dessen zugeordnete ebene Wellenfront als eine Referenzwellenfront verwendet wird.

6.  Verfahren nach einem der Ansprüche 1 bis 5, **dadurch gekennzeichnet,**

    - **dass** die Phasenverschiebung einer ersten Wellenfront relativ zu der Referenzwellenfront erzielt wird und auf Grundlage dieser Phasenverschiebung und der Energie der Strahlung der Wellenfront und auf Grundlage der Energie der Strahlung und dem Neigungswinkel der Referenzwellenfront eine neue Referenzwellenfront berechnet wird, die nun unter anderem durch die Energie ihrer Strahlung und die resultierende Phase definiert ist,
- **dass** die Phasenverschiebung einer zweiten Wellenfront relativ zu der neuen Referenzwellenfront halten wird und auf Grundlage dieser Phasenverschiebung, der Energie der Strahlung dieser Wellenfront und auf Grundlage der Energie der Strahlung und der Phase der Referenzwellenfront wiederum eine neue Referenzwellenfront berechnet wird,
- **dass** dieser Vorgang für jede Wellenfront durchgeführt wird, für die noch keine Phasenverschiebung halten wurde,
- **dass** der Satz von Änderungsparametern für das optische Element auf Grundlage der Energie der Strahlung und der resultierenden Phase der zuletzt berechneten Wellenfront halten wird, wobei die resultierende Phase eine Annäherung der gewünschten Phase und/oder der besten Lösung dafür zur Kompensation der Phasenstörung ist, und
- **dass** das optische Element hinsichtlich seiner optischen Eigenschaften entsprechend der erzielten Änderungsparameter modifiziert wird.

**7.** Verfahren nach einem der Ansprüche 1 bis 6, **dadurch gekennzeichnet, dass** die Änderungsparameter zur Änderung der Form des optischen Elements oder zur Änderung der Form einer optischen Fläche des optischen Elements, die einen übertragenden und/oder reflektierenden Effekt aufweist, und/oder zur Änderung der optischen Eigenschaften des optischen Elements ohne Verformung des optischen Elements verwendet werden.

**8.** Verfahren nach einem der Ansprüche 1 bis 7, **dadurch gekennzeichnet, dass** das optische Element ein optisches Transmissions- und/oder Reflexionselement ist.

**9.** Verfahren nach einem der Ansprüche 1 bis 8, **dadurch gekennzeichnet, dass** das optische Element ein Spiegel ist.

**10.** Verfahren nach einem der Ansprüche 1 bis 9, **dadurch gekennzeichnet, dass** das optische Element eine optische Fläche aufweist, von der die Strahlung durch Transmission und/oder Reflexion weiter zu der Kamers geleitet wird.

**11.** Verfahren nach einem der Ansprüche 1 bis 10, **dadurch gekennzeichnet, dass** zur Detektion der Energie der Strahlung und/oder zur Detektion der Informationen der durch die Modulation definierten Strahlung ein Teil der Strahlung in eine einzige optische Faser eingekoppelt wird.

**Revendications**

**1.** Procédé de détection des paramètres de modification pour une modification des caractéristiques optiques d'un élément optique agencé dans le chemin optique de rayonnement modulé d'un récepteur pour une communication optique en espace libre, pour une compensation de perturbations de phase provoquées suite à des turbulences atmosphériques, dans lequel, dans ledit procédé

- le rayonnement est focalisé, au moyen d'une lentille ou d'autre système optique, sur le centre d'une surface focale agencée dans le plan focal,
- le schéma de rayonnement de surface focale est capturé par une caméra,
- des chatoiements d'intensité de rayonnement individuels sont identifiés au sein de la surface focale au moyen d'un logiciel de traitement d'image,
- pour chaque chatoiement d'intensité de rayonnement, la position du point d'intensité de rayonnement maximale est obtenue,
- au point d'intensité maximale de chaque chatoiement d'intensité de rayonnement, un front d'onde plan par logiciel est attribué, c'est-à-dire un angle d'inclinaison et une énergie de rayonnement sont attribués à chaque front d'onde plan sur la base de la position du point d'intensité maximale et de l'intensité de rayonnement de son maximum de chatoiement associé,
- les fronts d'onde plans sont triés en fonction de la quantité des intensités maximales des chatoiements d'intensité de rayonnement, en partant de l'intensité maximale la plus élevée,
- l'un des fronts d'onde est sélectionné en tant que front d'onde de référence,
- sur la base du front d'onde de référence, des déphasages des fronts d'onde les uns par rapport aux autres sont obtenus,
- l'élément optique est modifié en correspondance à des déphasages différents adoptés par front d'onde, dans lequel, pour chaque front d'onde plan, ce déphasage adopté auquel l'énergie du rayonnement du front d'onde respectif est maximale, est sélectionné en tant que déphasage obtenu attribué à ce front d'onde plan,
- à partir des fronts d'onde, des énergies du rayonnement de ces fronts d'onde, des angles d'inclinaison et des déphasages détectés, est obtenu un ensemble de paramètres de modification pour la modification des caractéristiques optiques de l'élément optique requis pour une compensation des perturbations de phase.

2. Procédé selon la revendication 1, **caractérisé en ce que** le déphasage obtenu d'un front d'onde est déterminé en tant que ce déphasage auquel, avec des modifications différentes de l'élément optique, l'énergie du rayonnement est maximale, dans lequel l'élément optique est modifié au moyen d'ensembles différents de paramètres préréglables, chaque ensemble parmi eux correspondant à un déphasage différent, et, à chaque fois, l'énergie du rayonnement est obtenue de façon métrologique, dans lequel le déphasage obtenu est ce déphasage qui résulte de l'ensemble de paramètres de modification auquel l'énergie du rayonnement du front d'onde plan respectif est maximale.

3. Procédé selon la revendication 1 ou 2, **caractérisé en ce que** le maximum de l'énergie du rayonnement est obtenu sur la base d'une courbe passant par au moins deux et de préférence trois points qui indiquent l'énergie respective du rayonnement d'au moins deux et de préférence trois déphasages adoptés en correspondance desquels l'élément optique est déformé, dans lequel cette courbe est obtenue par un algorithme d'ajustement, notamment par optimisation convexe et de préférence par ajustement hyperbolique, et dans lequel le déphasage obtenu est ce déphasage auquel la courbe comprend son maximum absolu.

4. Procédé selon l'une quelconque des revendications 1 à 3, **caractérisé en ce que**, en tant que front d'onde de référence, est sélectionné le front d'onde plan qui est attribué au chatoiement d'intensité de rayonnement dont le point d'intensité maximale comprend l'intensité la plus élevée des points d'intensité maximale de tous les chatoiements d'intensité de rayonnement.

5. Procédé selon la revendication 4, **caractérisé en ce que**, au cas où une pluralité de chatoiements d'intensité de rayonnement existent qui ont des points d'intensité maximale avec des intensités identiques, un chatoiement d'intensité de rayonnement est sélectionné parmi ces chatoiements d'intensité de rayonnement et **en ce que** son front d'onde plan attribué est utilisé en tant que front d'onde de référence.

6. Procédé selon l'une quelconque des revendications 1 à 5, **caractérisé en ce que**

- le déphasage d'un premier front d'onde par rapport au front d'onde de référence est obtenu et, sur la base de ce déphasage et de l'énergie du rayonnement du front d'onde et sur la base de l'énergie du rayonnement et de l'angle d'inclinaison du front d'onde de référence, un nouveau front d'onde de référence est calculé qui à présent défini entre autres par l'énergie de son rayonnement et par la phase résultante,
- le déphasage d'un second front d'onde par rapport au nouveau front d'onde est obtenu et, sur la base de ce déphasage, l'énergie du rayonnement de ce front d'onde et sur la base de l'énergie du rayonnement et de la phase du front d'onde de référence, un nouveau front d'onde de référence est à son tour calculé,
- cette procédure est réalisée pour chaque front d'onde pour lequel aucun déphasage n'a encore été obtenu,
- l'ensemble de paramètres de modification pour l'élément optique est obtenu sur la base de l'énergie du rayonnement et de la phase résultante du dernier front d'onde de référence calculé, dans lequel la phase résultante est une approximation de la phase souhaitée et/ou la meilleure solution pour celle-ci pour une compensation de la perturbation de phase, et
- l'élément optique est modifié par rapport à ses caractéristiques optiques en correspondance des paramètres de modification obtenus.

7. Procédé selon l'une quelconque des revendications 1 à 6, **caractérisé en ce que** les paramètres de modification sont utilisés pour une modification de la forme de l'élément optique ou pour une modification de la forme d'une surface optique de l'élément optique qui a un effet transmissif et/ou réfléchissant, et/ou pour une modification des caractéristiques optiques de l'élément optique sans déformation de l'élément optique.

8. Procédé selon l'une quelconque des revendications 1 à 7, **caractérisé en ce que** l'élément optique est un élément de transmission et/ou de réflexion optique.

9. Procédé selon l'une quelconque des revendications 1 à 8, **caractérisé en ce que** l'élément optique est un miroir.

10. Procédé selon l'une quelconque des revendications 1 à 9, **caractérisé en ce que** l'élément optique comprend une surface optique depuis laquelle le rayonnement est acheminé en avant vers la caméra par transmission et/ou réflexion.

11. Procédé selon l'une quelconque des revendications 1 à 10, **caractérisé en ce que**, pour une détection de l'énergie du rayonnement et/ou une détection des informations du rayonnement qui est défini par la modulation, une partie du rayonnement est couplée en une fibre optique unique.

Fig. 1

Fig. 2

Fig. 3

**Image acquisition** $\boldsymbol{1}$

Intensity Focal speckle $\left| \boldsymbol{F} \right|^2$

**Image Processing** $\boldsymbol{2}$

Image normalization $\boldsymbol{B} = \sqrt{\left| F \right|^2 / \sum \left| F \right|^2}$

Detect main $M$ speckles
- Coordinates of speckle maximums $r_l$
- Normalized amplitudes $b_l$ (weighting coefficients)

**Creation of plane waves** $\boldsymbol{3}$

Using *IFFT* create $M$ plane waves weighted with $b$ coefficients

**Iterative phase compensation** $\boldsymbol{4}$

- Generate phases for DM $\{ \hat{\boldsymbol{\varphi}}_1, \hat{\boldsymbol{\varphi}}_2, \hat{\boldsymbol{\varphi}}_3 \}$
- Apply to DM $\hat{\boldsymbol{\varphi}}_{DM} \angle P$
- Convex optimization with feedback power $\eta$
- Find optimum phase shift $\hat{\theta}_{opt}$
- Sequential sum of optimized plane waves $\hat{\boldsymbol{\varphi}}$

**Signal acquisition** $\boldsymbol{5}$

Measure SMF coupled power $\eta$ for optimization

# Fig.4

$$|F|^2$$

## Fig.4a

Speckle 1     Speckle 2     Speckle 3     Speckle M

$B_1$     $B_2$     $B_3$     $B_M$

$b_1 = |B(r_1)|$    $b_2 = |B(r_2)|$    $b_3 = |B(r_3)|$    $\cdots$    $b_{M-1} = |B(r_{M-1})|$

## Fig.4b

$$\mathfrak{I}^{-1}\{\boldsymbol{B}_1\}$$

$$P_1 = b_1 e^{jK_1}$$

$$\mathfrak{I}^{-1}\{\boldsymbol{B}_2\}$$

$$P_2 = b_2 e^{jK_2}$$

$$\mathfrak{I}^{-1}\{\boldsymbol{B}_3\}\ldots$$

$$P_3 = b_3 e^{jK_3}$$

$$\mathfrak{I}^{-1}\{\boldsymbol{B}_M\}$$

$$P_M = b_M e^{jK_M}$$

Fig.4c

$$P \approx b_1 e^{jK_1} + b_2 e^{jK_2} e^{j\left\{\begin{matrix} \theta_1 \\ \theta_2 \\ \theta_3 \end{matrix}\right.}$$

$$\longrightarrow \quad b_3 e^{jK_3} e^{j\left\{\begin{matrix} \theta_1 \\ \theta_2 \\ \theta_3 \end{matrix}\right.}$$

$$\longrightarrow \quad +...+ b_{M-1} e^{jK_{M-1}} e^{j\left\{\begin{matrix} \theta_1 \\ \theta_2 \\ \theta_3 \end{matrix}\right.}$$

**Optimization 1**    **Optimization 2**    **Optimization M-1**

- Apply 3 piston phases $\{\theta_1, \theta_2, \theta_3\}$ to the current plane wave
- Extract the resultant 3 phases and send to DM $\{\hat{\varphi}_1, \hat{\varphi}_2, \hat{\varphi}_3\} \leftarrow \hat{\varphi}_{DM} \angle P$
- Measure coupled power after each DM change
- Parabolic fitting and select optimum phase $\theta_{opt}$ for maximum power
- Fix optimum phase for plane wave and proceed with next one

$$\hat{\varphi} = \arg\left\{P_1 + \sum_{l=2}^{M} P_l e^{j\hat{\theta}_{opt_l}}\right\}$$

# Fig.4d

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2388934 B

**Non-patent literature cited in the description**

- **HUIZHEN YANG et al.** Performance Comparison of Wavefront-Sensorless Adaptive Optics Systems by Using of the Focal Plane. *INTERNATIONAL JOURNAL OF OPTICS,* 01 January 2015, vol. 2015, 1-8
- **P-Y MADEC.** Overview of Deformable Mirror Technologies for Adaptive Optics and Astronomy. European Southern Observatory
- **HARDY.** Adaptive Optics for Astronomical Telescopes. Oxford University Press, 1998
- **BARCHERS, J. D. ; FRIED, D. L. ; LINK, D. J.** Evaluation of the Performance of Hartmann Sensors in Strong Scintillation. *Appl. Opt.,* 2002, vol. 41, 1012-1021
- **RODDIER ; FRANÇOIS.** Curvature sensing and compensation - a new concept in adaptive optics. *Appl. Opt.,* 1988, vol. 27, 1223-1225
- **CHEW, T. Y. ; CLARE, R. M. ; LANE, R. G.** *A comparison of the Shack-Hartmann and pyramid wavefront sensors Optics Communications,* 2006, vol. 268, 189-195
- **TAKEDA,M.** Fourier-transform method of fringe-pattern analysis for computer-based topography and interferometry. *J. Opt. Soc. Am.,* 1982, vol. 72, 156-160
- Comparison of Phase Diversity and Curvature Wavefront Sensing. **FIENUP, J.R.** Proc. of conference on Adaptive Optical System Technologies. SPIE, 1998, 3353
- **MURPHY, K.** Branch point detection and correction using the branch point potential method. *Proc. SPIE,* 2008, vol. 6951, 695105
- **FIENUP, J. R.** Phase retrieval algorithms - a comparison. *Appl. Opt.,* 1982, vol. 21, 2758-2769
- Performance of wavefront-sensorless adaptive optics using modal and zonal correction. **ANZUOLA, E.** Proc. Optics in Atmospheric Propagation and Adaptive Systems XIX. SPIE, 2016, vol. 10002, 100020J
- **FREUND, I.** Structural correlation in Gaussian random wave fields. *Phys. Rev.,* 1995, vol. E 51, 3770